# EUROPEAN PATENT APPLICATION

(11) **EP 4 721 568 A1**
(43) Date of publication of application: **08.04.2026**
(21) Application number: 24815642.4
(22) Date of filing: 03.06.2024
(51) Int. Cl.: A21C 3/06

(54) **ROLL SHAPING APPARATUS FOR FOOD DOUGH PIECE**

(30) Priority: 01.06.2023 JP 2023091077
(71) Applicant: Rheon Automatic Machinery Co., Ltd., Utsunomiya-shi, Tochigi 320-0071 (JP)
(72) Inventor: FUKUGAMI Taro, Utsunomiya-shi, Tochigi 320-0071 (JP); YAMAZAKI Tatsuya, Utsunomiya-shi, Tochigi 320-0071 (JP); SAITO Masahiro, Utsunomiya-shi, Tochigi 320-0071 (JP)
(74) Representative: Huebner, Stefan Rolf
(86) International application number: PCT/JP2024/020236
(87) International publication number: WO 2024/248163

(57) **Abstract**

A roll shaping apparatus (1) for a food dough piece (D) comprises a suction conveying device (2) and a roll device (5). The suction conveying device has a conveying member (22) on which the food dough piece is placed and conveyed, and a suction chamber (23) which is disposed inside the conveying member. The conveying member is provided with a plurality of perforations (221). The suction chamber has a suction connecting port (242) connected to a suction device (7). The suction chamber has a plurality of suction regions (26a-26d) arranged in the width direction (B). Each of the suction regions is provided with a suction port (27a) communicated with the suction connecting port. A total opening area of a suction port (27d) of the suction region located away from the suction connecting port is larger than a total opening area of the suction port (27a) of the suction region located near the suction connecting port.

## Description

### TECHNICAL FIELD

The present invention relates to an apparatus for rolling a flat food dough piece to shape a rolled product, and more specifically to a roll shaping apparatus for a rolling food dough piece while it is being suctioned by a suction conveying device which conveys the food dough piece.

### BACKGROUND ART

The Patent Documents 1 and 2 disclose a belt conveyor (suction conveying device) which conveys a food dough piece which lower surface is suctioned, and a roll device which is disposed above the belt conveyor and rolls the food dough piece. The belt conveyor includes a rotatable endless conveyor belt (conveying member), and a box-shaped suction chamber disposed inside the belt conveyor. The conveyor belt includes a moving surface on which the food dough piece is placed, and the moving surface has a plurality of perforations. By maintaining an internal space of the suction chamber at a low pressure, a suction force is caused at a predetermined region of the moving surface through the perforations. The low-pressure region of the belt conveyor described in the Patent Document 1 is defined larger than the food dough pieces.

In the belt conveyor described in the Patent Document 2, a plate with a plurality of suction ports is disposed at a top of the suction chamber. An entire profile of the suction port is defined to correspond to a shape of the food dough piece to be conveyed. Further, a plurality of types of the plates are prepared according to shapes of the food dough piece and can be replaced relative to the chamber body.

The Patent Documents 3 and 4 discloses a roller conveyor (suction conveying device) which conveys a food dough piece which lower surface is suctioned, and a roll device which is disposed above the roller conveyor and rolls the food dough piece. The roller conveyor includes a rotatable tubular roller (conveying member), and a tubular suction chamber which is disposed inside the tubular roller, wherein a portion of a peripheral surface of the suction chamber includes a suction port defining elongated apertures. The tubular roller includes a moving surface on which the food dough piece is placed, and the moving surface has a plurality of perforations. By maintaining an internal space of the suction chamber at a low pressure, a suction force is caused at a predetermined region of the moving surface through the perforations. This low-pressure region is defined based on lengths of the perforations of the elongated apertures of the roller conveyor arranged in a width direction.

### PRIOR ART PUBLICATION

Patent Document 1: European Patent Application Publication No. 1321040
Patent Document 2: European Patent Application Publication No. 2366290
Patent Document 3: International Publication No. 01/041574
Patent Document 4: European Patent Application Publication No. 2236039
Patent Document 5: International Publication No. 2015/190268

### SUMMARY OF THE INVENTION

### PROBLEM TO BE SOLVED BY THE INVENTION

In the devices described in the Patent Documents 1-4, the suction force caused through the perforations on the moving surface is not uniform depending on the distance from a suction connecting port of the suction chamber connected to the suction device. Thus, the suction force applied to the plurality of the food dough pieces disposed in the width direction of the suction conveying device is not stable. For example, the food dough piece away from the suction connecting port is not secured to the conveying member and may be slidably shifted on the moving surface. If this is the case, the legs (conical portions at the both ends) of the rolled product made from the triangular food dough piece may not be shaped symmetrically so that quality of the rolled product may be degraded.

Therefore, an object of the present invention is to provide a new roll shaping apparatus in which the food dough pieces in the roll shaping apparatus is not shifted from the desired position relative to the moving surface of the suction conveying device so that the rolled product can be stably shaped.

### MEANS FOR SOLVING THE PROBLEM

In order to achieve the object, a roll shaping apparatus for a food dough piece is characterized in that the roll shaping apparatus includes a suction conveying device which conveys the food dough piece in a conveying direction while the food dough piece is suctioned, and a roll device disposed above the suction conveying device to roll the food dough piece, wherein the suction conveying device includes a conveying member on which the food dough piece is placed and conveyed, and a suction chamber disposed inside the conveying member, wherein the conveying member has a plurality of perforations, wherein the suction chamber has a suction connecting port connected to the suction device, and further includes a surface facing an inner surface of the conveying member on which a plurality of suction regions defined in the width direction of the suction conveying device, each of the suction regions being constituted by one or a plurality of suction ports that communicate with the suction connecting port, and a total opening area of the suction ports in each suction region is wider in the suction region that is arranged farther from the suction connecting port than in the suction region that is arranged closer to the suction connecting port.

In the above-stated embodiment, it is preferably characterized that the suction region is defined by a plurality of the suction ports, wherein widths of the suction ports are the same as each other in each of the suction regions, and wherein the width of the suction port of the suction region located away from the suction connecting port is larger than the width of the suction port of the suction region located near the suction connecting port.

Further, in the above-stated embodiment, it is preferably characterized that an entire profile of the suction region is defined to correspond to a shape of the food dough piece.

Further, in the above-stated embodiment, it is preferably characterized that an entire profile of the suction region is formed to be triangular.

Further, in the above-stated embodiment, it is preferably characterized that the suction region is separated into suction members which detachably attached to the body of the suction chamber.

Further, in the above-stated embodiment, it is preferably characterized that the suction member is defined by a plurality of plates divided for each suction region.

Further, in the above-stated embodiment, it is preferably characterized that the roll shaping apparatus further includes an upstream belt conveyor disposed upstream of the suction conveying device to supply the food dough piece to the suction conveying device, a first dough pressing roller disposed above the upstream belt conveyor and allowed to be raised and lowered to press the food dough piece between the upstream belt conveyor and the first dough pressing roller, and a second dough pressing roller disposed above the suction conveying device and allowed to be raised and lowered to press the food dough piece between the suction conveying device and the second pressing roller.

Further, in the above-stated embodiment, it is preferably characterized that the suction conveying device is a belt conveyor, and the conveying member is a conveyor belt.

In the above-stated embodiment, it is preferably characterized that the suction conveying device is a roller conveyor, and the conveying member is a rotating tubular roller.

In the above-stated embodiment, it is preferably characterized that the roll shaping apparatus further includes an upstream belt conveyor disposed upstream of the suction conveying device to supply the food dough piece to the suction conveying device, and a downstream belt conveyor disposed downstream of the suction conveying device to receive the food dough piece from the suction conveying device and convey the food dough piece toward a downstream side, wherein the upstream belt conveyor is configured to allow a downstream end of the conveyor belt for conveying the food dough piece to be moved forward and backward in the conveying direction, and the suction conveying device is allowed to be contained below the conveyor belt moved forward toward the downstream belt conveyor.

In the above-stated embodiment, it is preferably characterized that the roll shaping apparatus further includes an upstream belt conveyor disposed upstream of the suction conveying device for supplying the food dough pieces to the suction conveying device, and a downstream belt conveyor disposed downstream of the suction conveying device to receive the food dough piece from the suction conveying device and convey the food dough piece toward a downstream side, wherein the downstream belt conveyor is configured to allow an upstream end of the conveyor belt for receiving the food dough piece to be moved forward and backward in the conveying direction, and the suction conveying device is allowed to be contained below the conveyor belt moved backward toward the upstream belt conveyor.

### EFFECTS OF THE INVENTION

According to the present invention, in the suction chamber of the suction conveying device, the total opening area of the suction port of each of the plurality of the suction regions is increased or decreased depending on the distance from the suction connecting port so that the suction force caused on the moving surface of the conveying member can be made uniform and stable. Thus, since the food dough piece is not shifted from the desired position, the rolled product can be stably shaped.

### BRIEF DESCRIPTION OF THE DRAWINGS

Fig. 1 is a front view schematically showing a roll shaping apparatus according to a first embodiment of the present invention.
Fig. 2 is a plan view schematically showing a roll shaping apparatus according to the first embodiment of the present invention.
Fig. 3 is a side view schematically showing a suction conveying device included in the roll shaping apparatus according to the first embodiment of the present invention.
Fig. 4 is an exploded perspective view schematically showing a suction chamber included in the roll shaping apparatus according to the first embodiment of the present invention.
Fig. 5 is a perspective view schematically showing the suction chamber included in the roll shaping apparatus according to the first embodiment of the present invention.
Fig. 6 is a plan view schematically showing the suction chamber included in the roll shaping apparatus according to the first embodiment of the present invention.
Fig. 7 is a plan view schematically showing a modification of the suction chamber included in the roll shaping apparatus according to the first embodiment of the present invention.
Fig. 8 is a front view schematically showing another used example of the roll shaping apparatus according to the first embodiment of the present invention.
Fig. 9 is a front view schematically showing a roll shaping apparatus according to a second embodiment of the present invention.
Fig. 10 is a plan view schematically showing a suction conveying device of the roll shaping apparatus according to the second embodiment of the present invention.
Fig. 11 is a plan view schematically showing a suction chamber included in the roll shaping apparatus according to the second embodiment of the present invention.
Fig. 12 is a front view schematically showing a modification of the suction chamber included in the roll shaping apparatus according to the second embodiment of the present invention.
Fig. 13 is a side view schematically showing a modification of the suction chamber of Fig. 12.
Fig. 14 is a front view schematically showing a modification of the roll shaping apparatus according to the first embodiment of the present invention.

### DESCRIPTION OF EMBODIMENTS

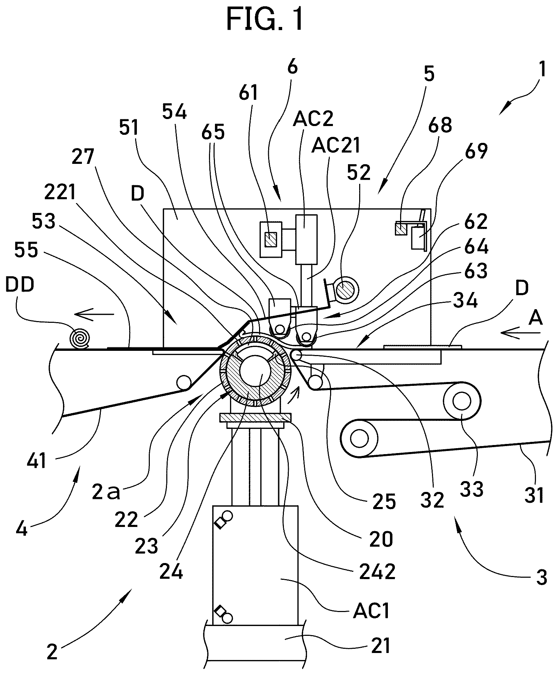

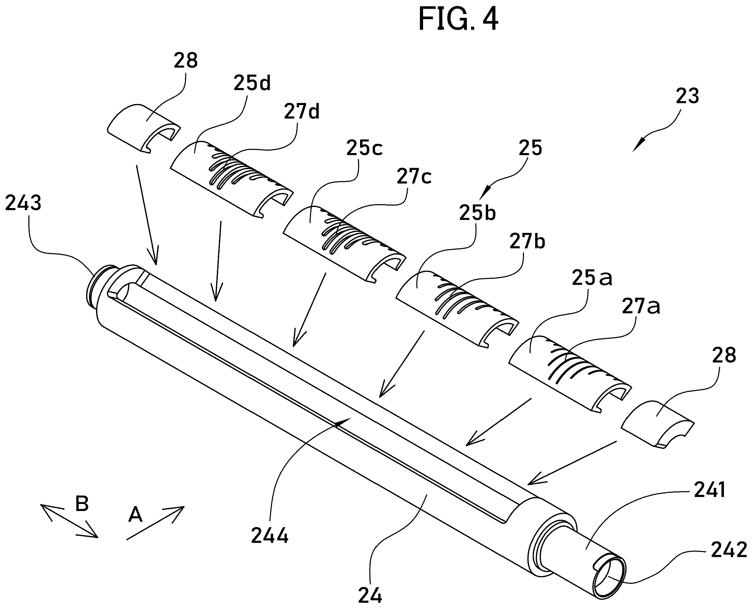

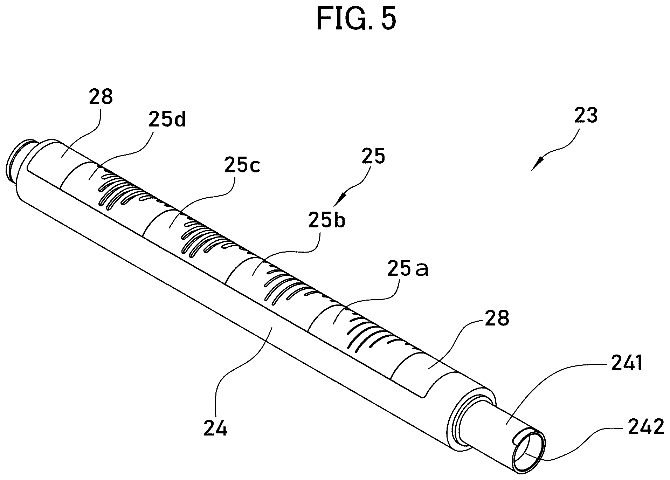

Referring to Figs. 1-6, a roll shaping apparatus 1 according to a first embodiment of the present invention will be explained. The roll shaping apparatus 1 includes a suction conveying device 2 which simultaneously suctions a food dough piece D and conveys the food dough piece D in a conveying direction A, an upstream belt conveyor 3, a downstream belt conveyor 4, a roll device 5, and a dough pressing device 6.

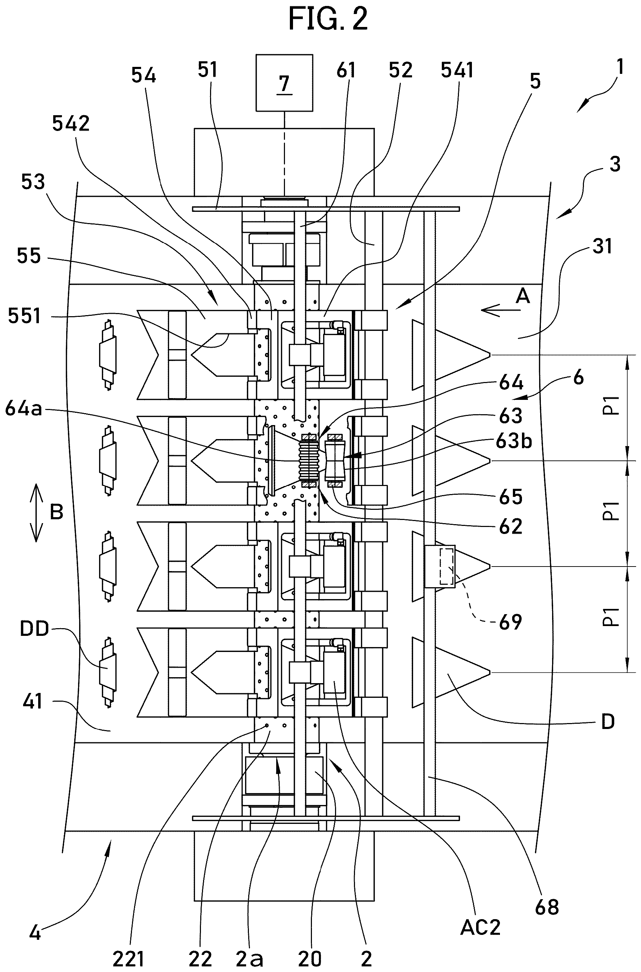

As shown in Fig. 2 in this embodiment, an example will be explained in which four rows of the food dough pieces D are arranged in a width direction B perpendicular to the conveying direction A at a predetermined interval P1, and are conveyed one after another in the conveying direction A. The food dough pieces D are flat and approximately triangular in shape which base sides are aligned in the width direction B.

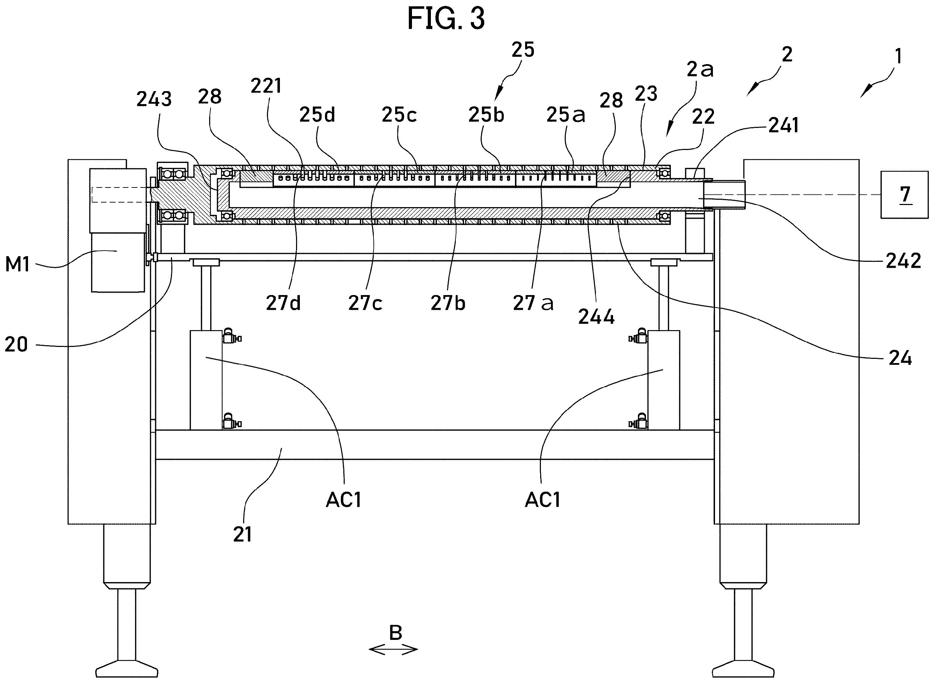

As shown in Fig. 3, the suction conveying device 2 is a roller conveyor and includes an upper base 20, a lower base 21, two first actuators AC1 connecting the upper base 20 and the lower base 21 at both ends of the bases 20, 21, and a roller conveyor unit 2a attached to the upper base 20. The roller conveyor unit 2a can be raised and lowered by the first actuators AC1.

The roller conveyor unit 2a includes an elongated tubular roller 22 and an elongated tubular suction chamber 23 disposed inside the tubular roller 22. The tubular roller 22 is connected to a drive motor M1 attached to the upper base 20 and is rotatably supported by the upper base 20. One end 241 of the tubular suction chamber 23 is fixed to the upper base 20, and the other end 243 of the tubular suction chamber 23 is supported by an inside of the tubular roller 22 via a bearing.

The tubular roller 22 functions as a conveying member on which the food dough piece D is placed and which conveys the food dough piece D in the conveying direction A. The tubular roller 22 has a peripheral surface (a moving surface) on which a plurality (a large number) of perforations (through apertures) 221 are arranged at a predetermined interval (see Fig. 2).

As shown in Figs. 3-6, the tubular suction chamber 23 includes a chamber body 24, suction members 25, and two spacers 28. The chamber body 24 has a cylindrical peripheral wall, in a portion (an upper portion in the side view) of which a mounting aperture 244 is provided to detachably attach the suction members 25 and spacers 28. Further, the suction chamber 23 (the chamber body 24) has a suction connecting port 242 connected to a suction device 7 on an end surface of the one end 241 of the suction chamber 23, and the other end (end surface) 243 opposite to the suction connecting port 242 is closed (formed with a bottom). The suction members 25 are attached to a center portion of the mounting aperture 244 and the spacers 28 are attached to both ends of the mounting aperture 244 (of the suction member 25) to cover the mounting aperture 244 of the chamber body 24 so that the integrally assembled suction chamber 23 has a cylindrical peripheral surface.

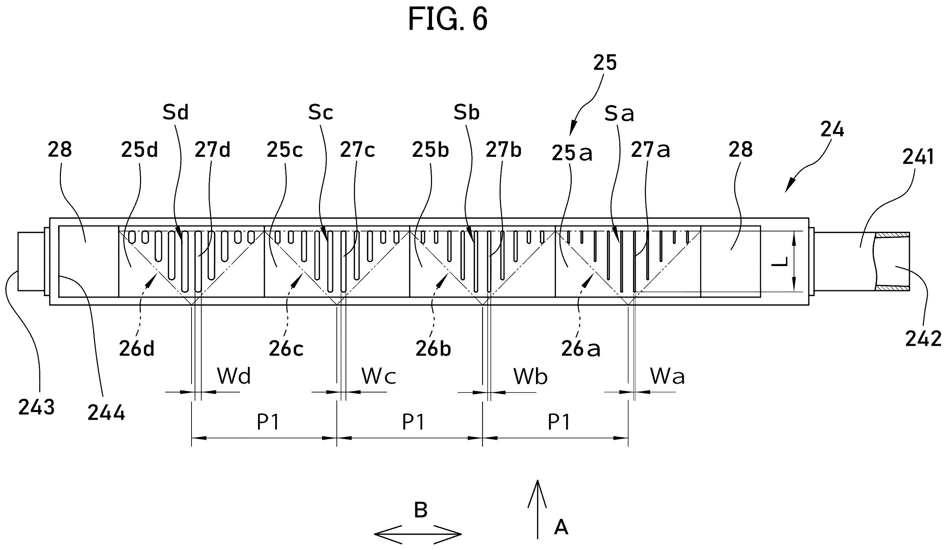

The suction members 25 are defined by four plates 25a-25d, which are arranged in order from the suction connecting port 242 toward the opposite end (the other end surface) 243. The plates 25a-25d have (define) suction regions 26a-26d, respectively (see Fig. 6). The suction regions 26a-26d are defined by regions including suction ports (ten elongated apertures) 27a-27d, respectively.

As shown in Fig. 6, in the plan view, the suction port 27a of the suction region 26a is defined by ten elongated apertures extending in the conveying direction A, and the ten elongated apertures are arranged parallel to each other at equal interval in the width direction B. Widths Wa of the ten elongated apertures of the suction port 27a are the same as each other. Regarding the lengths of the ten elongated apertures of the suction port 27a, the two of those located at the center of the suction region 26a in the width direction B are the longest, and the other of those gradually decrease toward the elongated apertures on the both sides of the suction port 27a. In this embodiment, the length of the elongated apertures located at the center of the suction port 27a is referred to as L. Downstream ends of the ten elongated apertures of the suction port 27a are aligned on a straight line in the width direction B, and an entire profile of the suction region 26a formed by the ten elongated apertures of the suction port 27a, specifically an entire profile (a profile enclosed by the ends of the elongated apertures) of the suction region 26a when a curved surface of the suction member 25 is converted into a flat surface, is triangular to correspond to the shape of the food dough piece D.

Widths W of the elongated apertures of the suction ports 27b-27d in the other suction regions 26b-26d are different from the width Wa of the elongated aperture of suction port 27a in the suction region 26a. In this embodiment, the width of the elongated apertures of the suction port 27b is referred to as Wb, the width of the elongated apertures of the suction port 27c is referred to as Wc, and the width of the elongated apertures of the suction port 27d is referred to as Wd. The four widths Wa-Wd are defined to become gradually large from the suction connecting port 242 toward the opposite end (end surface) 243 of the suction chamber 23.

A sum of opening areas of the suction port 27a (ten elongated apertures) in the suction region 26a is referred to as a total opening area Sa, and similarly total opening areas of the suction regions 26b-26d are referred to as Sb-Sd, respectively. The four total opening areas Sa-Sd are defined to become gradually large from the suction connecting port 242 toward the opposite end (end surface) 243 of the suction chamber 23. Namely, regarding the total opening areas Sa-Sd of the suction ports 27a-27d in the suction regions 26a-26d, the total opening area Sd of the suction region 26d located away from the suction connecting port 242 is larger than the total opening area Sa of the suction region 26a located near the suction connecting port 242.

The entire profile of each of the suction regions 26b-26d is the same as the entire profile of the suction region 26a, and is triangular (is defined by a triangle). The suction regions 26a-26d are arranged in the width direction B at the equal interval P1.

The roller conveyor unit 2a is assembled by inserting the suction chamber 23, which has been integrally assembled (configured) as described above, into the tubular roller 22. Then, the suction regions 26a-26d of the suction chamber 23 face an inner surface of the tubular roller (conveying member) 22. The roller conveyor unit 2a is attached to the upper base 20. The suction device 7 is connected to the suction connecting port 242. The roller conveyor unit 2a is configured so that when the suction device 7 is activated, air is suctioned through the perforations 221 of the tubular roller 22, which are communicated to the suction ports 27a-27d to cause a suction force on the peripheral surface (moving surface) of the tubular roller 22.

This suction force causes (defines) four low-pressure regions (not shown) corresponding to the four suction regions 26a-26d on the moving surface. An entire profile of the low-pressure region is triangular to correspond to the shape and size of the food dough piece D to be conveyed. Further, the low-pressure regions are arranged in the width direction B at equal interval P1.

The upper base 20 and the lower base 21 are connected to each other by the first actuators AC1 disposed at the both ends of the bases 20, 21. The actuator AC1 is, for example, a pneumatic linear cylinder. The upper base 20 is configured to be raised and lowered by operating the actuators AC1 to move rods of the actuators AC1 upward and downward.

As shown in Fig. 1, the upstream belt conveyor 3 includes a rotatable endless conveyor belt 31, a downstream end roller 32 disposed at a downstream end of the belt conveyor 3 and wound around by and inside of the conveyor belt 31, and a return roller 33 disposed below and upstream of the downstream end roller 32 and wound around by and outside of the conveyor belt 31.

The upstream belt conveyor 3 is disposed upstream of the suction conveying device 2 so that a downstream end of the conveyor belt 31 is located adjacent to the tubular roller (conveying member) 22 of the suction conveying device (roller conveyor) 2. The upstream belt conveyor 3 is configured to convey and supply the food dough piece D in the conveying direction A to the suction conveying device 2.

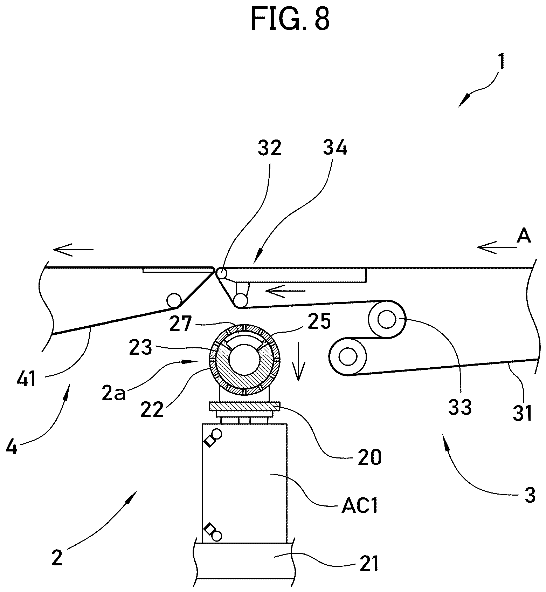

As shown in Figs. 1 and 8, the upstream belt conveyor 3 is also configured so that the downstream end roller 32 and the return roller 33 are simultaneously reciprocated toward the downstream belt conveyor 4. This allows the downstream end 34 of the conveyor belt 31 to be moved forward and backward in the conveying direction A.

The downstream belt conveyor 4 includes a rotatable endless conveyor belt 41. The downstream belt conveyor 4 is disposed downstream of the suction conveying device 2 so that an upstream end of the conveyor belt 41 is located adjacent to the tubular roller (conveying member) 22 of the suction conveying device (roller conveyor) 2. The downstream belt conveyor 4 is configured to receive the food dough piece D conveyed from the suction conveying device 2 and convey the food dough piece D toward a downstream side. Positions of the upstream belt conveyor 3 and the downstream belt conveyor 4 relative to the tubular roller 22 are preferably adjacent to the suction conveying device 2 so that the perforations 221 of the tubular roller 22, which cause the suction force through the suction ports 27a-27d of the suction chamber 23, are not covered by the conveyor belts 31 and 41.

As shown in Figs. 1 and 2, the roll device 5 is disposed above the upstream belt conveyor 3, the suction conveying device 2, and the downstream belt conveyor 4. The roll device 5 includes frames 51 attached to both ends of a base (not shown) of the upstream conveyor 3 in the width direction B, a span shaft 52 attached to the frames 51 at the both ends, and four roll units 53.

The four roll units 53 are arranged in the width direction B at an interval P1 to correspond to the four rows of the food dough pieces D to be conveyed. The roll unit 53 includes a roll plate 54 and a roll sheet 55. The roll plate 54 is substantially H-shaped with apertures in a plan view, and includes two upper arms 541 swingably attached to the span shaft 52. The roll plate 54 includes two lower legs (lower ends) 542 which are configured to be located at a portion (bridge portion) adjacent to the tubular roller 22 of the suction conveying device 2 and the upstream end of the conveyor belt 41 when the roll plate 54 depends most downwardly.

Further, the roll sheet 55 is rectangular with a cutout 551, and is attached to lower surfaces of the lower legs 542 of the roll plate 54 to extend in the conveying direction A along the conveyor belt 41. The roll sheet 55 is preferably bendable (flexible) in the conveying direction A and the width direction B to conform to the shape of the food dough piece D to be rolled. The roll sheet 55 is made of, for example, polyester. Further, the roll sheet 55 includes the cutout 551 extending in the conveying direction A at the center in the width direction B and located on an upstream side of the roll sheet 55.

As shown in Figs. 1 and 2, the dough pressing device 6 includes a first span bracket 61 attached to the frames 51 at the both ends of the roll device 5, four dough pressing units 62 attached to the first span bracket 61, a second span bracket 68, and a sensor 69. The four dough pressing units 62 are arranged in the width direction B at the interval P1 to correspond to the four rows of the food dough pieces D. The dough pressing unit 62 includes a first dough pressing roller 63, a second dough pressing roller 64, support brackets 65 which support the first dough pressing roller 63 and the second dough pressing roller 64 so that these rollers 63, 64 can freely rotate, and a second actuator AC2. The second actuator AC2 is, for example, a pneumatic cylinder.

The first dough pressing roller 63 is disposed above the conveyor belt 31. As shown in Fig. 2, the first dough pressing roller 63 is formed in a double-enveloping (hourglass) shape, in which a central portion in an axial direction along the width direction B is narrower than both ends. Namely, the first dough pressing roller 63 includes protrusions at the both ends, and a bottom between the protrusions in a valley of slopes 63b inside of the protrusions.

The second dough pressing roller 64 is disposed above the tubular roller (conveying member) 22 of the suction conveying device 2. The second dough pressing roller 64 includes a plurality of protrusions 64a which have the same shape, extend in a circumferential direction, and are arranged in the axial direction (width direction) B at an equal interval, and between which bottoms are defined.

The second actuator AC2 is attached to the first span bracket 61. The support brackets 65 are attached to a rod AC21 of the second actuator AC2. The first and second dough pressing rollers 63, 64 can be raised and lowered via the respective support brackets 65 by moving the rod AC21 upward and downward.

The sensor 69 is attached to the second span bracket 68 which is attached to the frames 51 at the both ends of the roll device 5. The sensor 69 is a detection device for detecting one row of the food dough pieces D, and is disposed upstream of the dough pressing unit 62 and above the conveyor belt 31. The second actuator AC2 allows the first and second dough pressing rollers 63, 64 to be lowered from their upper standby positions based on a detection signal sent from the sensor 69 to a control device (not shown).

Next, an operation of the roll shaping apparatus according to the first embodiment of the present invention will be explained. As shown in Fig. 2, the substantially triangular food dough pieces D in the four rows are conveyed in the conveying direction A by the upstream belt conveyor 3 while the base sides of the food dough pieces D are aligned in the width direction B, and supplied to the roller conveyor unit 2a of the suction conveying device 2. When the base sides of the food dough pieces D are transferred from the conveyor belt 31 to the moving surface of the tubular roller (conveying member) 22, the lower surfaces of the food dough pieces D are attracted and secured to the moving surface by the suction force caused through the perforations 221 of the tubular roller 22. The food dough pieces D are then conveyed in the conveying direction A together with the tubular roller 22 by rotation of the tubular roller 22.

Further, the food dough piece D conveyed by the upstream belt conveyor 3 is detected by the sensor 69 of the dough pressing device 6. When the food dough piece D passes under the second dough pressing roller 64, the first and second dough pressing rollers 63, 64 are lowered to press the conveyed food dough piece D from the above between the first dough pressing roller 63 and the conveyor belt 31 and between the second dough pressing roller 64 and the tubular roller 22.

An operation of the left and right slopes 63b of the first dough pressing roller 63 allows a portion around an apex of the triangular food dough piece D to be positioned at a center of the food dough piece D in the width direction B. Further, the second dough pressing roller 64 prevents the food dough piece D from sliding in the width direction B due to an operation of the plurality of protrusions 64a.

When the food dough piece D comes into contact with the roll plate 54 via the roll sheet 55 of the roll unit 53, a core for a rolling action is created and the rolling action begins. Since each of the food dough pieces D is equally subjected to the suction force in the four low-pressure regions (not shown), the core of the food dough piece D can be reliably created without sliding the food dough piece D on the moving surface.

Further, after the core of the food dough piece D is transferred onto the downstream conveyor belt 4, the core is drawn between the downstream conveyor belt 41 and the roll sheet 55 of the roll unit 53, and begins to roll. Then, the food dough piece D is preferably stretched between the core of the food dough piece D and the tubular roller 22. After the food dough piece D has passed the second dough pressing roller 64, the first and second dough pressing rollers 63, 64 are raised.

A diameter of the food dough piece D gradually increases, while the portion around the apex of the food dough piece D is continuously maintained to be suctioned to the tubular roller 22 and the food dough piece D is rolled. Then, the food dough piece D is transferred onto the conveyor belt 41 and rolled up to the end under the roll sheet 55. Thus, a rolled product DD is formed. The rolled product DD passing through the roll sheet 55 is conveyed by the conveyor belt 41 in the conveying direction A.

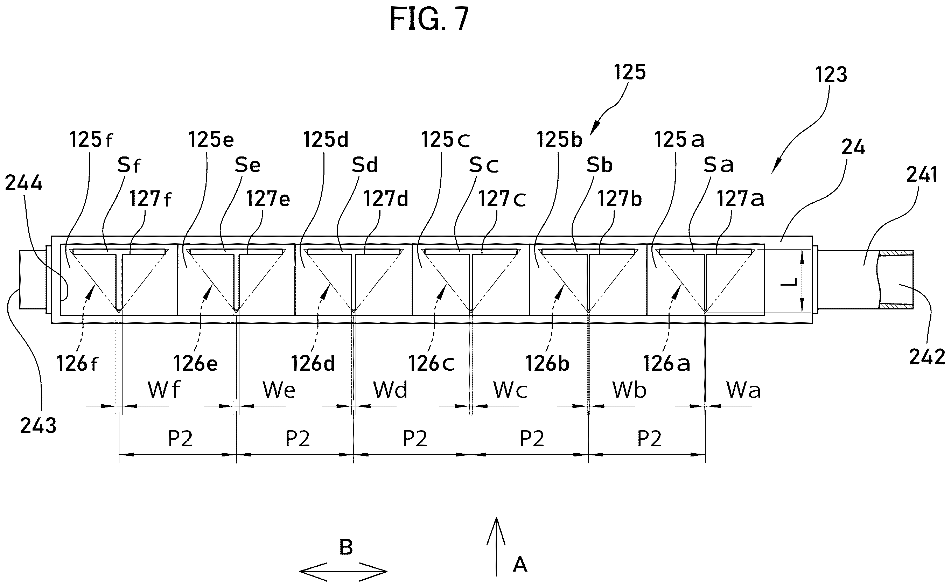

Next, referring to Fig. 7, a modification of the tubular suction chamber will be explained. In this modification, an example will be explained in which six rows of the food dough pieces D are aligned in the width direction B at an interval P2 and conveyed in the conveying direction A. A tubular suction chamber 123 includes the chamber body 24 and suction members 125. The suction chamber 123 is integrally assembled by attaching the suction members 125 to the chamber body 24 to cover the mounting aperture 244, and has a cylindrical peripheral surface.

The suction members 125 are defined by six plates 125a-125f, which are arranged in order from the suction connecting port 242 toward the opposite end (the other end surface) 243. The six plates 125a-125f have (define) suction regions 126a-126f, respectively. The suction regions 126a-126f are defined by regions including one suction port 127a-127f, respectively.

In the plan view, the suction port 127a of the suction region 126a is defined by a T-shaped aperture, i.e., by a lateral opening extending in the width direction B and a longitudinal opening extending in the conveying direction A and connected to a center of the lateral opening. The longitudinal opening of the suction port 127a has a width Wa and a length L in the conveying direction A. An entire profile of the suction region 126a formed by the suction port 127a, specifically an entire profile when the suction region 126a is converted into a flat surface, is triangular to correspond to the shape of the food dough piece D.

Widths W of the longitudinal openings of suction ports 127b-127f in the other suction regions 126b-126f are different from the width Wa of the longitudinal opening of the suction port 127a in the suction region 126a. In this modification, the suction ports 127b-127f have widths Wb-Wf of the longitudinal openings, respectively. The widths Wa-Wf are defined to become gradually large from the suction connecting port 242 toward the opposite end (end surface) 243 of the suction chamber 123. Further, in the lateral openings of the suction ports 127a-127f, the widths in the width direction B are all the same as each other, and the lengths in the conveying direction A are all the same as each other.

A sum of opening areas of the suction port 127a in the suction region 126a is referred to as the total opening area Sa, and similarly, total opening areas of the suction ports 127b-127f in the suction regions 126b-126f are referred to as Sb-Sf, respectively. The six total opening areas Sa-Sf are defined to become gradually large from the suction connecting port 242 toward the opposite end (end surface) 243 of the suction chamber 123. Namely, regarding the total opening areas Sa-Sf of the suction ports 127a-127f in the suction regions 126a-126f, the total opening area Sf of the suction region 126f located away from the suction connecting port 242 is larger than the total opening area Sa of the suction region 126a located near the suction connecting port 242.

An entire profile of each of the suction regions 126b-126f is similar to the entire profile of the suction region 126a, namely, triangular. The suction regions 126a-126f are arranged in the width direction B at the equal interval P2. The roller conveyor unit 2a is configured so that when the suction device 7 is activated by using the suction chamber 123, air is suctioned through the perforations 221 of the tubular roller 22, which are communicated to the suction ports 127a-127f, to cause a suction force on the peripheral surface (moving surface) of the tubular roller 22. This suction force causes (defines) six low-pressure regions (not shown) on the moving surface at the equal interval in the width direction B. Further, six modified roll units and six modified dough pressing units are provided to be applied to a size of the food dough pieces D to be conveyed.

An operation when the modification of the suction chamber 123 is used is similar to the operation when the suction chamber 23 of the roll shaping apparatus 1 according to the present invention is used.

Next, referring to Fig. 8, another use (modification) of the roll shaping apparatus 1 will be explained. The roll shaping apparatus 1 may be used as a shaping apparatus for shaping other products without using the suction conveying device 2. Conventionally, a modification operation of the components of the shaping apparatus, such as removing the suction conveying device from the shaping apparatus, is time consuming and is inefficient.

In this embodiment, as described above, the roller conveyor unit 2a of the suction conveying device 2, which includes the tubular roller (conveying member) 22, can be raised and lowered together with the upper base 20. Further, the downstream end 34 (downstream end roller 32) of the conveyor belt 31 of the upstream belt conveyor 3 can be moved forward and backward along the conveying direction A. Thus, in a state of the suction conveying device 2 shown in Fig. 1, the first actuator AC1 is actuated to lower the roller conveyor unit 2a, and then the downstream end 34 of the conveyor belt 31 is moved forward in the conveying direction A so that the downstream end of the conveyor belt 31 is located adjacent to the upstream end of the conveyor belt 41 of the downstream belt conveyor 4.

This allows the roller conveyor unit 2a (suction conveying device 2) to be contained below the conveyor belt 31 which has been moved forward toward the downstream belt conveyor 4. This modification mechanism allows the roll shaping apparatus 1 to be efficiently transformed into a shaping apparatus rather than a roll shaping apparatus.

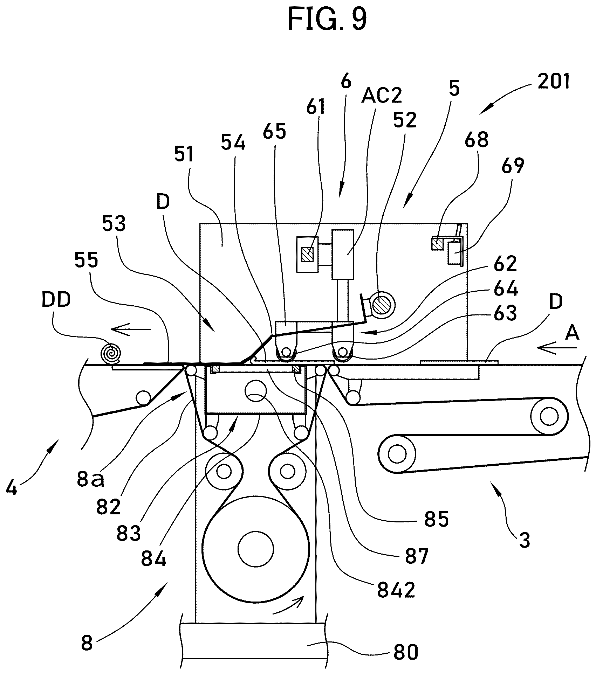

Next, referring to Figs. 9-11, a roll shaping apparatus 201 according to a second embodiment of the present invention will be explained. Components of the roll shaping apparatus 201 which have the same functions as those of the roll shaping apparatus 1 are indicated by the same reference numerals as those of the roll shaping apparatus 1, and detailed explanation of the components of the roll shaping apparatus 201 will be omitted. The roll shaping apparatus 201 is configured so that the roller conveyor of the suction conveying device 2 of the roll shaping apparatus 1 is changed to a belt conveyor.

As shown in Fig. 9, the roll shaping apparatus 201 includes a suction conveying device 8, the upstream belt conveyor 3, the downstream belt conveyor 4, the roll device 5, and the dough pressing device 6.

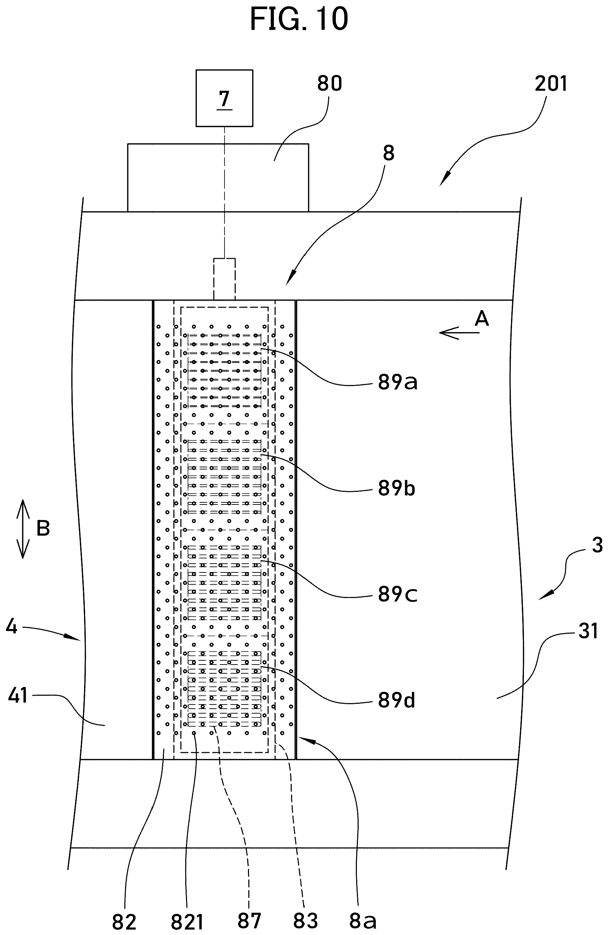

The suction conveying device 8 includes a base 80 and a belt conveyor unit 8a attached to the base 80. The belt conveyor unit 8a includes an endless conveyor belt 82 and a box-shaped suction chamber 83. The conveyor belt 82 is configured to be wound around a drive roller (not shown) connected to a drive motor (not shown) and other rollers (not shown) to be rotated. The conveyor belt 82 functions as a conveying member on which the food dough pieces D is placed and which conveys the food dough pieces D in the conveying direction A. The conveyor belt 82 has a surface (moving surface) on which a plurality (a large number) of perforations 821 are arranged at a predetermined interval (see Fig. 10).

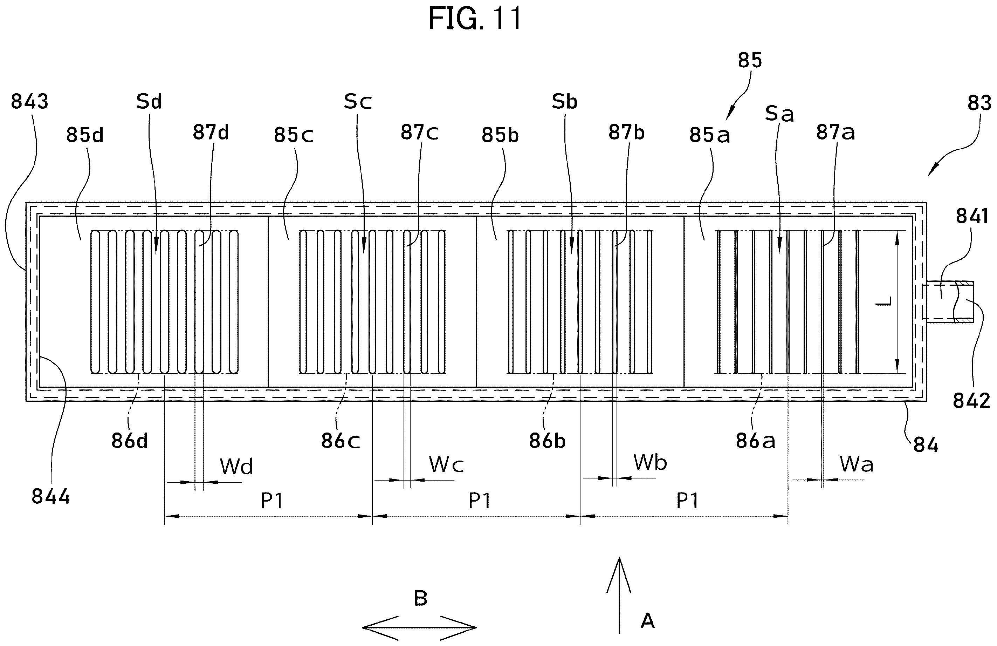

As shown in Fig. 11, the box-shaped suction chamber 83 is elongated in the width direction B, disposed inside the conveyor belt 82, and configured so that the conveyor belt 82 runs on a flat upper surface of the box-shaped suction chamber 83. The box-shaped suction chamber 83 includes a chamber body 84 and suction members 85. The chamber body 84 has a mounting aperture 844 on the upper surface of a substantially rectangular parallelepiped, and the suction members 85 are attached to the mounting aperture 844. Further, as shown in Fig. 11, the chamber body 84 has a suction connecting port 842 (inside of a connecting pipe) connected to the suction device 7 at one end (end surface) 841, and the other end (end surface) 843 opposite (facing) the one end (end surface) is closed. The suction members 85 are attached to the mounting aperture 844 of the chamber body 84 to cover the mounting aperture 844 so that the integrally assembled suction chamber 83 defines a rectangular parallelepiped box.

The suction members 85 are defined by four flat plates 85a-85d, which are arranged in order from the suction connecting port 842 toward the opposite end (end surface) 843. The plate 85a has (defines) a suction region 86a. The suction region 86a is defined by a region including a suction port (eight elongated apertures) 87a. Similarly, the other plates 85b-85d have (defines) suction regions 86b-86d, respectively, and the suction regions 86b-86d are defined by regions including the suction ports (eight elongated apertures) 87b-87d, respectively.

In the plan view, the suction port 87a is defined by eight elongated apertures extending in the conveying direction A, and the eight elongated apertures have the same shape and are arranged parallel to each other in the width direction B at an equal interval. Widths and lengths of the eight elongated apertures of the suction port 87a are referred to as Wa and L, respectively. An entire profile of the suction region 86a formed by the eight elongated apertures of the suction port 87a is rectangular, and a length of the entire profile in the width direction B is preferably the same as or slightly shorter than the length of the base side of the triangular food dough piece D.

Widths W of the elongated apertures of the other suction ports 87b-87d are different from the width Wa of the elongated aperture of the suction port 87a. In this embodiment, the width of the elongated aperture of the suction port 87b is referred to as Wb, the width of the elongated aperture of the suction port 87c is referred to as We, and the width of the elongated aperture of the suction port 87d is referred to as Wd. The four widths Wa-Wd are defined to become gradually large from the suction connecting port 842 toward the opposite end (end surface) 843 of the suction chamber 83.

A sum of opening areas of the suction port 87a (eight elongated apertures) in the suction region 86a is referred to as a total opening area Sa, and similarly total opening areas of the suction regions 86b-86d are referred to as Sb-Sd, respectively. The four total opening areas Sa-Sd are defined to become gradually large from the suction connecting port 842 toward the opposite end (end surface) 843 of the suction chamber 83. Namely, regarding the total opening areas Sa-Sd of the suction ports 87a-87d in the suction regions 86a-86d, the total opening area Sd of the suction region 86d located away from the suction connecting port 842 is larger than the total opening area Sa of the suction region 86a located near the suction connecting port 842.

The entire profile of each of the suction regions 86b-86d is the same as the entire profile of the suction region 86a, and is rectangular (is defined as a rectangle). The suction regions 86a-86d are arranged in the width direction B at the equal interval P1.

The belt conveyor unit 8a is configured so that when the suction device 7 connected to the suction connecting port 842 is activated, air is suctioned through the perforations 821 in the conveyor belt 82, which are communicated to the suction ports 87a-87d, to cause a suction force on an upper surface (moving surface) of the conveyor belt 82.

This suction force causes (defines) four low-pressure regions 89a-89d corresponding to the four suction regions 86a-86d on the moving surface (see Fig. 10). An entire profile of each of the low-pressure regions 89a-89d is rectangular which is substantially the same shape and size as the entire profile of the suction regions 86a-86d, respectively. Further, the low-pressure regions 89a-89d are arranged in the width direction B at the equal interval P1.

An operation and effects of the roll shaping apparatus 201 according to the second embodiment of the present invention are generally similar to those of the roll shaping apparatus 1 explained above. The roll shaping apparatus 1 is effective when the length of the food dough pieces D in the conveying direction A is relatively short relative to the roll shaping apparatus 201. Further, a structure of the roll shaping apparatus 201 can be made simpler than that of the roll shaping apparatus 1.

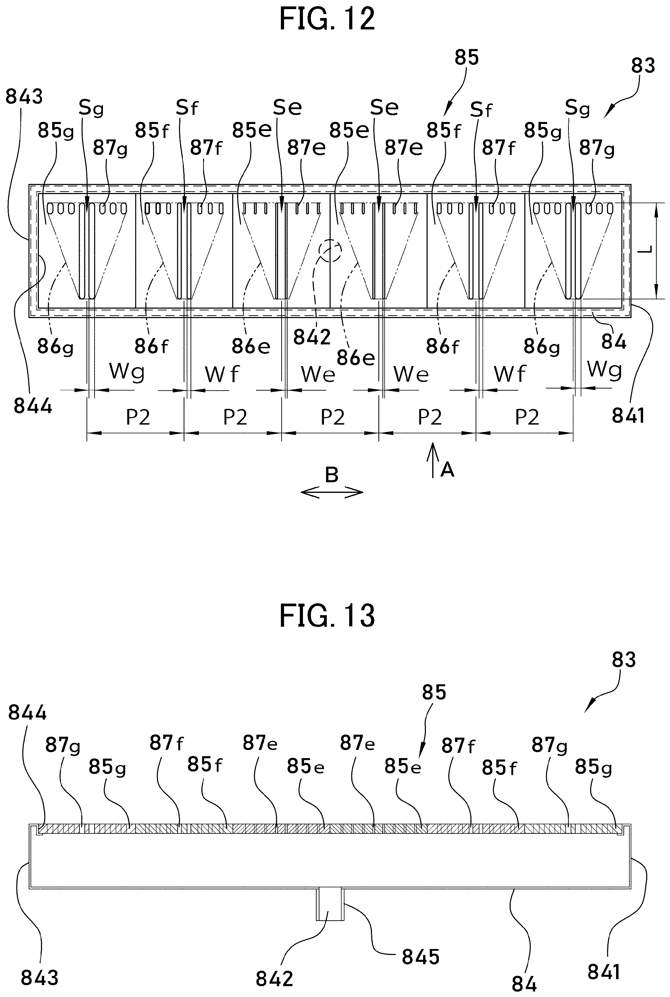

Next, referring to Fig. 12, a modification of the box-shaped suction chamber 83 of the roll shaping apparatus 201 will be explained. In this modification, an example will be explained in which six rows of the food dough pieces D are aligned in the width direction B at the interval P2 and conveyed in the conveying direction A. The box-shaped suction chamber 83 includes a chamber body 84 and suction members 85.

The chamber body 84 has a bottom surface, and a suction connecting port 842 (connection pipe 845) connected to the suction device 7 and located at a center of the bottom surface. In the side view, left and right ends (end surfaces) 841, 843 of the chamber body 84 are closed.

The suction members 85 are defined by two sets of three flat plates 85e-85g, which are arranged in order from the suction connecting port 842 toward both ends (end surfaces) 841, 843. The plates 85e-85g have (define) suction regions 86e-86g, respectively. In the plan view, the suction region 86e is defined by a region including a suction port (eight elongated apertures) 87e, and the eight elongated apertures extend in the conveying direction A are arranged in the width direction B parallel to each other and evenly spaced. Regarding the eight elongated apertures of the suction port 87e, lengths of the two elongated apertures located at a center in the width direction B are longer than the elongated apertures located on the left and right side of the two elongated apertures. Widths of the elongated apertures of the suction port 87e are referred to as We, and the lengths of the two elongated apertures located at the center are referred to as L. The widths We of the eight elongated apertures of the suction port 87e are the same as each other.

Widths W of the elongated apertures of the other suction ports 87f-87g of the other suction regions 86f-86g are different from the width We of the elongated aperture of the suction port 87e of the suction region 86e. In this modification, the width of the elongated aperture of the suction port 87f is referred to as Wf, and the width of the elongated aperture of the suction port 87g is referred to as Wg. The three widths We-Wg are defined to become gradually large from the suction connecting port 842 toward the both ends (end surfaces) 841, 843 of the suction chamber 83.

An entire profile of the suction region 86e defined by the eight elongated apertures of the suction port 87 is triangular, and a length of the entire profile in the width direction B is preferably the same as or slightly shorter than the length of the base side of the triangular food dough piece D.

A sum of opening areas of the suction port 87e (eight elongated apertures) in the suction region 86e is referred to as a total opening area Se, and similarly total opening areas of the suction regions 86f-86g are referred to as Sf-Sg, respectively. The three total opening areas Se-Sg are defined to become gradually large from the suction connecting port 842 toward the both ends (end surfaces) 841, 843 of the suction chamber 83. Namely, regarding the total opening areas Se-Sf of the suction ports 87e-87g in the suction regions 86e-86g, the total opening area of the suction regions located away from the suction connecting port 842 is larger than the total opening area of the suction regions located near the suction connecting port 842.

In this modification, the belt conveyor unit 8a is assembled in which the box-shaped suction chamber 83 is disposed inside the conveyor belt 82. When the suction device 7 connected to the suction connecting port 842 is activated, a suction force is caused on the upper surface (moving surface) of the conveyor belt 82. The suction force acting on each row of the food dough pieces D is uniform and stable, namely, the suction force does not largely decrease from the center toward the both ends 841, 843 in the width direction B. This prevents the food dough piece D from sliding from a desired position so that the rolled product DD can be stably shaped.

Explanations of the roll shaping apparatus according to the embodiments of the present invention for rolling food dough piece D to shape a food product are generally done above, but it goes without saying that various modifications are possible within the scope of the claims, and are also fallen within the scope of the present invention.

In the above embodiments, examples are explained in which the shape of the food dough piece D is triangular, but a rectangular food dough piece may also be rolled to form a rod-shaped rolled product. In this case, the suction region of the suction chamber preferably has the same shape as the rectangular food dough piece. Further, it is preferable that the low-pressure region caused on the moving surface of the conveying member has the shape of the rectangular food dough piece, and the size of the low-pressure region is the same as or slightly smaller than the size of the food dough piece. Further, the suction region of the suction chamber may be changed to apply to another shape of food dough piece.

In the above embodiments, the suction member 25, 125, 85 detachable from the chamber body 24, 84 is divided into a plurality of multiple plates 25a-25d, 125a-125f, 85a-85d, each of which has (partitions) a suction region, but the suction member may be formed by a single plate, and the single plate may have (partitions) multiple suction regions. Also, the chamber body 24, 84 may not have the mounting apertures 244, 844, and a suction port may be formed integrally with the tubular suction chamber 23 or the box-shaped suction chamber 83.

Further, instead of the downstream end of the upstream conveyor belt 31 configured to be moved forward and backward, the upstream end of the conveyor belt 41 of the downstream belt conveyor 4 may be configured to be moved forward and backward toward the upstream side in the conveying direction A. This allows the suction conveying device 2 to be contained below the conveyor belt 41 which has been moved forward toward the upstream belt conveyor 3 after the roller conveyor unit 2a including the tubular roller (conveying member) 22 is lowered.

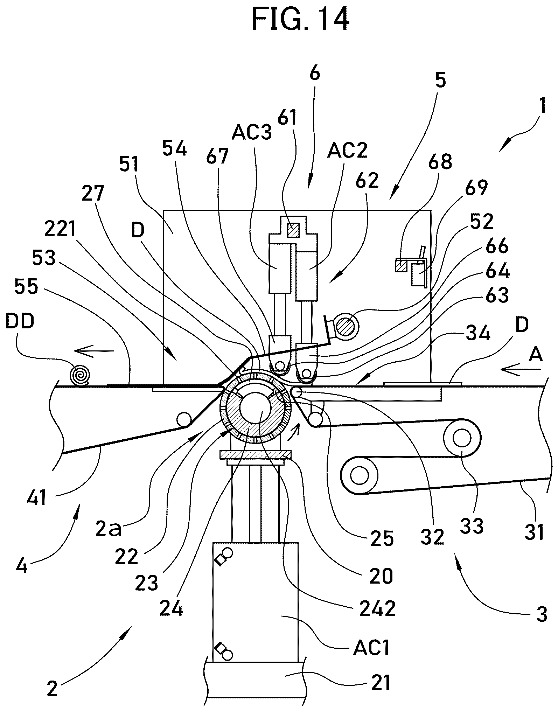

Further, as another modification of the dough pressing unit 62 of the dough pressing device 6 shown in Fig. 14, the dough pressing unit 62 may include support brackets 66, 67 separately supporting the first and second dough pressing rollers 63, 64, instead of the support bracket 65 supporting the first and second dough pressing rollers 63, 64, and a third actuator AC3 allowing the second dough pressing roller 64 to be raised and lowered in addition to the second actuator AC2 allowing the first dough pressing roller 63 to be raised and lowered. The third actuator AC3 is, for example, a pneumatic cylinder. This modification of the dough pressing unit 62 can be also applied to the roll shaping apparatus 201 according to the second embodiment.

By raising and lowering the first dough pressing roller 63 and the second dough pressing roller 64 separately at different timings, the food dough piece D can be pressed for a relatively long time so that the food dough piece D is not shifted from the desired position, and the rolled product DD can be formed more stably.

1, 201: roll shaping apparatus
2, 8: suction conveying device (roller conveyor, belt conveyor)
22, 82: conveying member (tubular roller, conveyor belt)
221, 821: perforation
23, 83: suction chamber (tubular, box-shaped)
24, 84: chamber body
242, 842: suction connecting port
25, 85: suction member
25a-25d, 85a-85d, 85e-85g, 125a-125f: plate
26a-26d, 86a-86d, 86e-86g, 126a-126f: suction region
27a-27d, 87a-87d, 87e-87g, 127a-127f: suction port
3: upstream belt conveyor
31: conveyor belt
4: downstream belt conveyor
41: conveyor belt
5: roll device
63: first dough pressing roller
64: second dough pressing roller
7: suction device
A: conveying direction
B: width direction
D: food dough piece

## Claims

1. A roll shaping apparatus (1, 201) for a food dough piece (D), comprising:
a suction conveying device (2, 8) for conveying the food dough piece (D) in a conveying direction (A) while suctioning the food dough piece (D); and
a roll device (5) disposed above the suction conveying device (2, 8) for rolling the food dough piece (D),
wherein the suction conveying device (2, 8) includes a conveying member (22, 82) on which the food dough piece (D) is placed for conveying the food dough piece (D), and a suction chamber (23, 83) disposed inside the conveying member (22, 82),
wherein the conveying member (22, 82) has a plurality of perforations (221, 821), and the suction chamber (23, 83) has a suction connecting port (242, 842) connected to a suction device (7),
wherein a surface of the suction chamber (23, 83) facing an inner surface of the conveying member (22, 82) includes a plurality of suction regions (26a-26d, 86a-86d, 86e-86g, 126a-126f) which are arranged along a width direction (B) perpendicular to the conveying direction (A) and correspond to a plurality of rows of the food dough piece, and each of the suction regions (26a-26d, 86a-86d, 86e-86g, 126a-126f) includes one or more suction ports (27a-27d, 87a-87d, 87e-87g, 127a-127f) communicating with the suction connecting port (242, 842), and
wherein a total opening area of the suction port (27d, 87d, 87g, 127f) of the suction region (26d, 86d, 86g, 126f) located far from the suction connecting port (242, 842) is larger than a total opening area of the suction port (27a, 87a, 87a, 127a) of the suction region (26a, 86a, 86e, 126a) located near the suction connecting port (242, 842).

2. The roll shaping apparatus (1, 201) according to claim 1,
wherein each of the suction regions (26a-26d, 86a-86d, 86e-86g, 126a-126f) includes a plurality of rows of the suction ports (27a-27d, 87a-87d, 87e-87g) which are elongated and extend in the conveying direction (A),
wherein widths of the suction ports (27a-27d, 87a-87d, 87e-87g) in each of the suction regions (26a-26d, 86a-86d, 86e-86g, 126a-126f) are the same as each other, and
wherein the widths of the plurality of suction ports (27d, 87d, 87g) of the suction region (26d, 86d, 86g) located far from the suction connecting port (242, 842) is larger than the widths of the plurality of suction ports (27a, 87a, 87a) of the suction region (26a, 86a, 86e) located near the suction connecting port (242, 842).

3. The roll shaping apparatus according to claim 1,
wherein an entire profile of the suction region (26a-26d, 86a-86d, 86e-86g, 126a-126f) corresponds to a shape of the food dough pieces (D).

4. The roll shaping apparatus according to claim 1,
wherein an entire profile of the suction region (26a-26d, 86e-86g, 126a-126f) is triangular.

5. The roll shaping apparatus according to claim 1,
wherein the suction chamber (23, 83) includes a chamber body (24, 84) and a suction member (25, 85) detachably attached to the chamber body (24, 84), and the suction member (25, 85) includes the suction region (26a-26d, 86a-86d, 86e-86g, 126a-126f).

6. The roll shaping apparatus according to claim 5,
wherein the suction member (25, 85) is defined by a plurality of plates (25a-25d, 85a-85d, 85e-85g, 125a-125f) separated to correspond to the respective suction regions (26a-26d, 86a-86d, 86e-86g, 126a-126f).

7. The roll shaping apparatus according to claim 1, further comprising:
an upstream belt conveyor (3) for supplying the food dough piece (D) to an upstream side of the suction conveying device (2, 8),
a first dough pressing roller (63) which is disposed above the upstream belt conveyor (3) and can be raised and lowered for pressing the food dough piece (D) between the upstream belt conveyor (3) and the first dough pressing roller (63), and
a second dough pressing roller (64) which is disposed above the suction conveying device (2, 8) and can be raised and lowered for pressing the food dough piece (D) between the suction conveying device (2, 8) and the second dough pressing roller (64).

8. The roll shaping apparatus according to claim 1,
wherein the conveying member (8) is a conveyor belt (82).

9. The roll shaping apparatus according to claim 1,
wherein the conveying member (2) is a rotating tubular roller (22).

10. The roll shaping apparatus according to claim 1, further comprising:
an upstream belt conveyor (3) disposed upstream of the suction conveying device (2, 8) for supplying the food dough piece (D) to the suction conveying device (2, 8), and
a downstream belt conveyor (4) disposed downstream of the suction conveying device (2, 8) for receiving the food dough piece (D) from the suction conveying device (2, 8) and conveying the food dough piece (D) downstream,
wherein a downstream end of the conveyor belt (31) of the upstream belt conveyor (3) or an upstream end of the conveyor belt (41) of the downstream belt conveyor (4) is configured to be allowed to be moved forward and backward in the conveying direction (A), and
wherein the conveying member (22, 82) is allowed to be lowered, and the conveyor belt (31) of the upstream belt conveyor (3) or the conveyor belt (41) of the downstream belt conveyor (4) is allowed to be moved forward above the lowered conveying member (2, 8).

11. The roll shaping apparatus according to claim 7,
wherein the first dough pressing roller (63) and the second dough pressing roller (64) are allowed to be raised and lowered separately.
